# EUROPEAN PATENT APPLICATION

(11) **EP 4 733 939 A1**
(43) Date of publication of application: **29.04.2026**
(21) Application number: 24830437.0
(22) Date of filing: 05.06.2024
(51) Int. Cl.: G06F 9/50, G06V 10/26

(54) **LOAD-REDUCING RENDERING METHOD AND ELECTRONIC DEVICE**

(30) Priority: 25.06.2023 CN 202310754454
(71) Applicant: Huawei Technologies Co., Ltd., Shenzhen, Guangdong 518129 (CN)
(72) Inventor: CHEN, Minghui, Shenzhen, Guangdong 518129 (CN); QIU, Hongbing, Shenzhen, Guangdong 518129 (CN); LV, Bailin, Shenzhen, Guangdong 518129 (CN); ZHENG, Tianji, Shenzhen, Guangdong 518129 (CN); WANG, Shu, Shenzhen, Guangdong 518129 (CN)
(74) Representative: Goddar, Heinz J.
(86) International application number: PCT/CN2024/097626
(87) International publication number: WO 2025/001791

(57) **Abstract**

Embodiments of this application provide a load-reducing rendering method. In a period in which a user touches a screen by using a finger, an electronic device may identify occlusion areas at all levels (a finger touch area, a finger occlusion area, and a palm occlusion area) based on touch information of the finger touch area, and perform differentiated load-reducing rendering on the occlusion areas at all the levels. For example, load-reducing rendering such as rendering culling is performed on the finger touch area, and rendering such as resolution reduction, image texture reduction, or feature point clipping is performed on the finger occlusion area and the palm occlusion area. For finger occlusion areas with different visibility, resolution reduction, image texture reduction, and feature point clipping of different degrees can be implemented. In this way, load of rendering a game picture by a GPU can be reduced without affecting user experience.

## Description

This application claims priority to Chinese Patent Application No. 202310754454.7, filed with the China National Intellectual Property Administration on June 25, 2023, and entitled "LOAD-REDUCING RENDERING METHOD AND ELECTRONIC DEVICE", which is incorporated herein by reference in its entirety.

### TECHNICAL FIELD

This application relates to the field of electronic technologies, and in particular, to a load-reducing rendering method and an electronic device.

### BACKGROUND

Game picture rendering has a high requirement on performance of a graphics processing unit (graphics processing unit, GPU). In addition, long-time high-resolution game picture rendering may impose heavy rendering load on the GPU. This may cause problems such as game picture freezing, high device power consumption, overheating, and a short battery life.

### SUMMARY

According to a first aspect, an embodiment of this application provides a load-reducing rendering method, which may include: An electronic device displays, on a screen, a picture provided by a first application, detects a touch operation of a finger of a user on the screen, and obtains touch information of the touch operation; the electronic device determines a multi-level occlusion area based on the touch information, where the multi-level occlusion area includes a finger touch area and a finger occlusion area, and the finger occlusion area surrounds a periphery of the finger touch area; and the electronic device performs load-reducing rendering on a picture of the multi-level occlusion area, where more-load-reducing rendering is performed on a picture of an occlusion area that is closer inward to a touch center, the touch center is a center of the finger touch area, and the load-reducing rendering includes one or more of the following: rendering culling, image texture reduction, image resolution reduction, feature point reduction, and shading rate reduction.

In the first aspect, the method in the first aspect is implemented, so that the electronic device can more precisely determine areas with different occlusion degrees, and adapt to a differentiated load-reducing rendering means, thereby reducing GPU-based rendering load without affecting the user's gaming experience.

With reference to the first aspect, in some embodiments, that more-load-reducing rendering is performed on the picture of the occlusion area that is closer inward to the touch center may specifically include: Rendering culling is performed on a picture of the finger touch area, and one or more of the following processing is performed on a picture of the finger occlusion area: image texture reduction, image resolution reduction, feature point reduction, and shading rate reduction. The finger occlusion area that is closer inward to the touch center may indicate that resolution may be reduced, image texture may be reduced, and more feature points may be clipped to a greater extent.

With reference to the first aspect, in some embodiments, the first application may be a game application, the picture further displays a direction wheel and a skill key, the touch operation acts on the direction wheel or the skill key, and the direction wheel and the skill key are respectively distributed in a lower left corner and a lower right corner of the screen or are respectively distributed in a lower right corner and a lower left corner of the screen.

The first application is not limited to a game application, and may alternatively be another application that provides a graphical user interface and receives a touch input of the user. The method in the first aspect is also applicable to such an application, to reduce rendering load of the graphical user interface when the user touches the screen by using the finger.

With reference to the first aspect, in some embodiments, the finger touch area is an elliptical area, the touch information includes center coordinates, major and minor axes, and an elliptical direction of the elliptical area, and the elliptical direction is an extension direction of the major axis.

There may be N finger occlusion areas, where N is a positive integer. The N finger occlusion areas may be constructed based on N elliptical areas extended from the finger touch area. The extended elliptical area and the finger touch area have a same elliptical direction, and a same major-axis vertex that is close to a screen center. One finger occlusion area is an area left after a largest nested elliptical area is subtracted from one extended elliptical area.

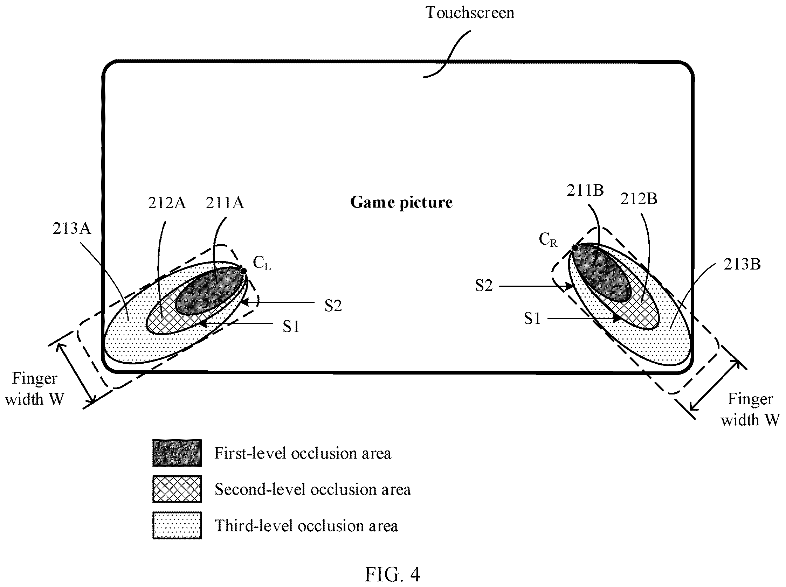

When N=1, the largest elliptical area in the extended elliptical area is the finger touch area. For example, a finger occlusion area 212A in FIG. 4 is an area left after a finger touch area (namely, a largest nested elliptical area in an elliptical area S1) is subtracted from the extended elliptical area S1.

When N≥2, the extended N elliptical areas that participate in constructing a left- or right-finger occlusion area may be nested layer by layer, and are gradually enlarged, to construct multi-level finger occlusion areas with different occlusion degrees. An area left after a largest nested elliptical area is subtracted from an elliptical area forms a level-one finger occlusion area. For example, a finger occlusion area 212A in FIG. 4 is an area left after a finger touch area is subtracted from an extended elliptical area S1, and a finger occlusion area 213A is an area left after the elliptical area S1 (namely, a largest nested elliptical area in an elliptical area S2) is subtracted from the extended elliptical area S2.

A sum of two minor axes of an extended outermost elliptical area is equal to a width W of a first finger, or a difference between the sum of the two minor axes of the extended outermost elliptical area and the width W of the first finger is less than a first value, for example, 2 millimeters. The first finger may be a thumb.

When N≥2, the load-reducing rendering may include: The N finger occlusion areas use different shading rates, where a game picture of a finger occlusion area that is closer inward to the touch center uses a lower shading rate.

With reference to the first aspect, in some embodiments, the multi-level occlusion area may further include a left-palm occlusion area. The left-palm occlusion area is an area that is in a rectangular area or a triangular area in the lower left corner of the screen and that is not covered by a finger touch area of a left finger and a finger occlusion area of the left finger. A diagonal of the rectangular area in the lower left corner is a connection line segment from a center of the left-finger touch area to the lower left corner of the screen, and a hypotenuse of the triangular area in the lower left corner is the connection line segment.

With reference to the first aspect, in some embodiments, the multi-level occlusion area further includes a right-palm occlusion area. The right-palm occlusion area is an area that is in a rectangular area or a triangular area in the lower right corner of the screen and that is not covered by a right-finger touch area of a right finger and a right-finger occlusion area of the right finger. A diagonal of the rectangular area in the lower right corner is a connection line segment from a center of the right-finger touch area to the lower right corner of the screen, and a hypotenuse of the triangular area in the lower right corner is the connection line segment.

According to a second aspect, this application provides an electronic device. The electronic device includes one or more processors and one or more memories. The memory is coupled to the processor, the one or more memories are configured to store computer program code, and the computer program code includes computer instructions. When the processor executes the computer instructions, the electronic device is enabled to perform the method described in any one of the first aspect or the possible implementations of the first aspect.

According to a third aspect, an embodiment of this application provides a chip system. The chip system is used in an electronic device. The chip system includes one or more processors. When the processor is configured to invoke computer instructions, the electronic device is enabled to perform the method described in any one of the first aspect and the possible implementations of the first aspect.

According to a fourth aspect, this application provides a computer-readable storage medium, including instructions. When the instructions are run on an electronic device, the electronic device is enabled to perform the method described in any one of the first aspect and the possible implementations of the first aspect.

According to a fifth aspect, this application provides a computer program product including instructions. When the computer program product runs on an electronic device, the electronic device is enabled to perform the method described in any one of the first aspect and the possible implementations of the first aspect.

### BRIEF DESCRIPTION OF DRAWINGS

FIG. 1 shows an example of an electronic device according to an embodiment of this application;
FIG. 2 shows an example of a scenario in which a user holds an electronic device in a landscape mode to play a game;
FIG. 3 shows an example in which a finger touch area is simulated as an elliptical area according to an embodiment of this application;
FIG. 4 shows an example in which a plurality of nested elliptical areas are extended based on a finger touch area to construct a multi-level finger occlusion area according to an embodiment of this application;
FIG. 5 shows an example in which a rectangular area is extended based on a finger touch area to construct a palm occlusion area according to an embodiment of this application;
FIG. 6 shows an example of a palm occlusion area constructed based on a finger touch area according to an embodiment of this application;
FIG. 7 shows an example of a load-reducing rendering solution according to an embodiment of this application;
FIG. 8 shows an example of a software system architecture of an electronic device;
FIG. 9 shows cooperation between software modules in the software system architecture shown in FIG. 8; and
FIG. 10 shows an overall procedure of a load-reducing rendering method according to an embodiment of this application.

### DESCRIPTION OF EMBODIMENTS

Terms used in the following embodiments of this application are merely intended to describe specific embodiments, but are not intended to limit this application.

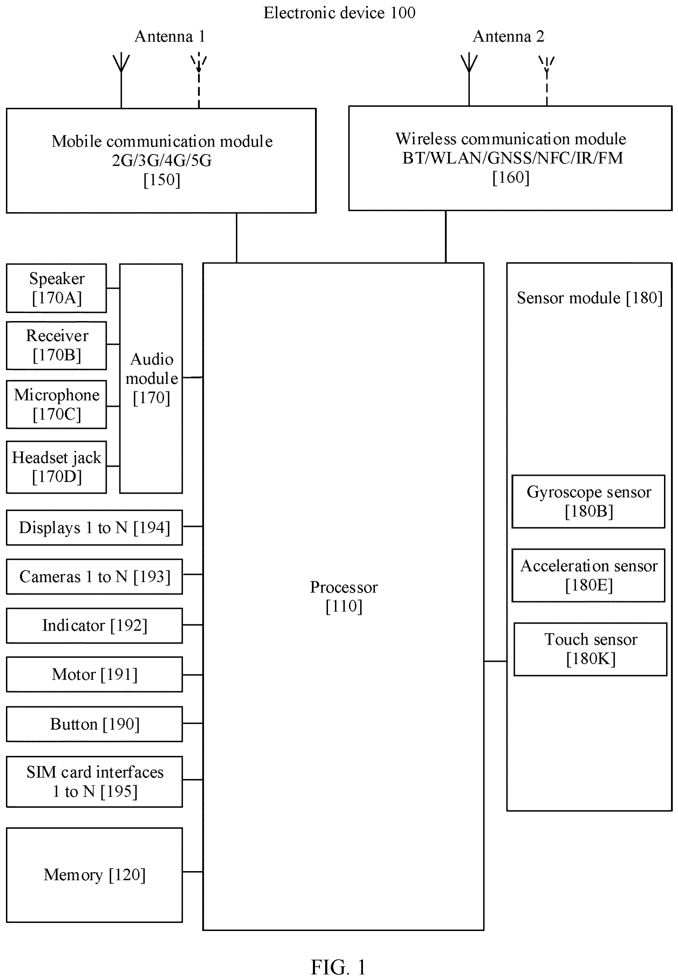

FIG. 1 shows an electronic device 100 according to an embodiment of this application.

The electronic device 100 may be a portable smart device, for example, a mobile phone, a tablet computer, a handheld computer, or a personal digital assistant (personal digital assistant, PDA).

As shown in FIG. 1, the electronic device 100 may include a processor 110, a memory 120, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

The sensor module 180 may include a gyroscope sensor 180B, an acceleration sensor 180E, a touch sensor 180K, and the like.

The processor 110 may be a processor having a powerful processing capability and rich storage and peripheral resources, for example, an application processor (application processor, AP), a neural-network processing unit (neural-network processing unit, NPU), a graphics processing unit (GPU), or a modem processor; or may be a system on chip (SOC) integrating a plurality of processors.

The processor 110 may include one or more interfaces, for example, an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (GPIO) interface, a subscriber identity module (subscriber identity module, SIM) interface, and/or a universal serial bus (universal serial bus, USB) interface.

A cache may be disposed in the processor 110, and may be configured to store instructions or data just used or cyclically used by the processor 110. If the processor 110 needs to use the instructions or the data again, the instructions or the data may be directly invoked from the cache. This can reduce waiting time of the processor 110, and improve program running efficiency.

The processor 110 may be further connected to the memory 120. The memory 120 may include a program storage area and a user data storage area. The program storage area may store an operating system and one or more applications (for example, a game application). The data storage area may store data (for example, a photo and a contact) created by a user in a process of using the electronic device 100. The memory 120 may be a high-speed random access memory, or may be a non-volatile memory, for example, a magnetic disk, a flash memory, or a universal flash storage (universal flash storage, UFS). Alternatively, the memory 120 may be an external storage card, for example, a micro SD card.

The memory 120 may further store code instructions of a load-reducing rendering method provided in embodiments of this application. When the processor 110 reads the code instructions from the memory 120 and runs the code instructions, the electronic device 100 may be enabled to perform the load-reducing rendering method.

A wireless communication function of the electronic device 100 may be implemented through the antenna 1, the antenna 2, the mobile communication module 150, the wireless communication module 160, the modem processor, a baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD). The display panel may be manufactured by an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, and brightness of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation and the like on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, and quickly processes input information with reference to a structure of a biological neural network, for example, a transfer mode between human brain neurons, and may further continuously perform self-learning. Applications such as intelligent cognition of the electronic device 100, for example, image recognition, facial recognition, speech recognition, and text understanding, may be implemented through the NPU.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an electrical audio signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, thereby implementing a directional recording function and the like.

The headset jack 170D is configured to connect to a wired headset. The headset jack 170D may be a USB interface, or may be a 3.5 mm open mobile electronic device platform (open mobile terminal platform, OMTP) standard interface, or a cellular telecommunications industry association of the USA (cellular telecommunications industry association of the USA, CTIA) standard interface.

The gyroscope sensor 180B may be configured to determine a motion posture of the electronic device 100. In some embodiments, an angular velocity of the electronic device 100 around three axes (namely, axes x, y, and z) may be determined through the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application, for example, switching between a landscape mode and a portrait mode or a pedometer.

The touch sensor 180K is also referred to as a touch panel. The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the electronic device 100 at a location different from that of the display 194.

The button 190 includes a power button, a volume button, and the like. The button 190 may be a mechanical button, or may be a touch button. The electronic device 100 may receive a key input, and generate a key signal input related to user setting and function control of the electronic device 100. The motor 191 may generate a vibration prompt. The SIM card interface 195 is configured to connect to a SIM card. The SIM card may be inserted into the SIM card interface 195 or removed from the SIM card interface 195, to implement contact with or separation from the electronic device 100.

The structure shown in FIG. 1 does not constitute a specific limitation on the electronic device 100. The electronic device 100 may include components more or fewer than those shown in the figure, or some components may be combined, or some components may be split, or there may be a different component arrangement. The components shown in the figure may be implemented by hardware, software, or a combination of software and hardware.

A game application may be installed on the electronic device 100. To reduce load of rendering a game picture by a GPU, an embodiment of this application provides a load-reducing rendering method. The following describes the method in detail.

### Identify occlusion areas at all levels

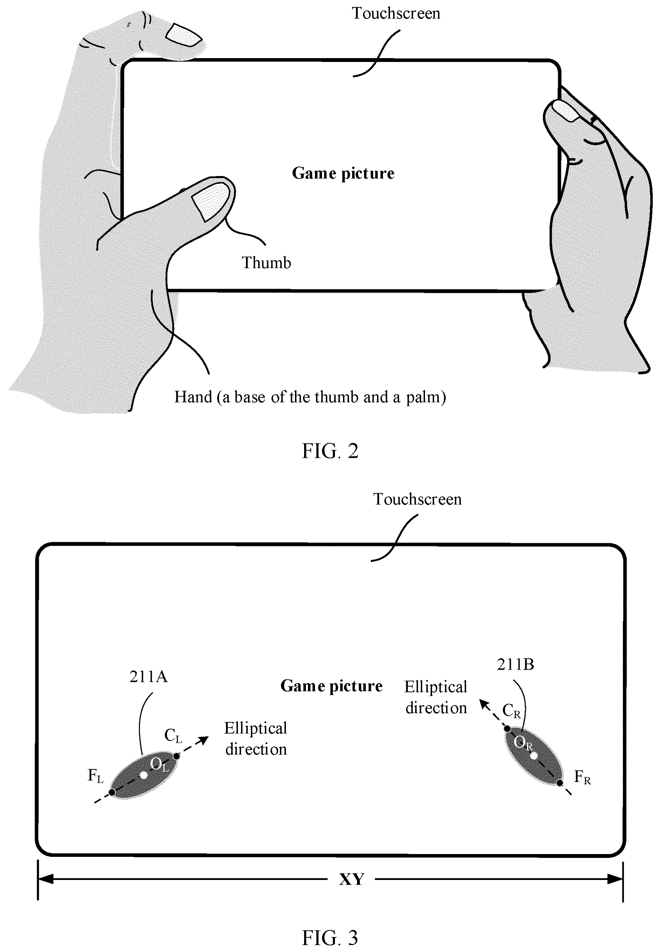

As shown in FIG. 2, when a user holds the electronic device 100 (for example, in a landscape mode) to play a game, some areas of a game picture displayed on a screen are occluded by a hand part such as a thumb of the user. Usually, a lower left corner area of the screen is designed as a wheel area, and a lower right corner area of the screen is designed as a skill area. The user needs to operate and control the wheel area and the skill area, which may occlude the screen. As a result, this part of game picture is invisible or has poor visibility. For example, a pad of the thumb touches and presses a touchscreen, making an area pressed by the pad invisible to the user. In addition, a part, of the thumb, other than the pad hovers close above the touchscreen, causing poor visibility of a game picture area below the part. In addition, a base of the thumb and a palm part connected to the base of the thumb usually also touch or occlude the lower left corner area and the lower right corner area of the screen. As a result, a lower left corner area and a lower right corner area of the game picture are invisible to the user or have poor visibility.

According to the load-reducing rendering method provided in this embodiment of this application, these occluded areas are accurately identified by level, to lay a foundation for subsequent differentiated load-reducing rendering. The occlusion areas at all the levels may include a finger touch area, a finger occlusion area, and a palm occlusion area. A method of accurately identifying the occlusion areas at all the levels is described as follows:

### Identify the finger touch area

In this specification, the finger touch area is a screen area that is directly touched by a finger. A game picture displayed in the finger touch area is invisible to the user and has a highest occlusion degree. Herein, the finger includes but is not limited to a human finger, and may further include a machine finger, a simulated finger, or the like that simulates a human finger.

The finger touch area may be identified based on a touch event reported by the screen (which is specifically a touchscreen). When a finger press is detected, the screen collects touch information, for example, information such as a location, a shape, and a size of the touch area. The information may be carried in the touch event. Based on the touch information, the electronic device 100 may identify the finger touch area.

Specifically, as shown in FIG. 3, the finger touch area may be simulated as an ellipse, and center (O') coordinates, major and minor axes, and an elliptical direction of the ellipse are used as the touch information. The elliptical direction may be an extension direction of the major axis, and the direction may be specifically represented by an included angle between the major axis and a side (for example, a side XY) of the screen. The major axis of the ellipse has two vertices: a vertex (such as C_{L} or C_{R}) that is close to a screen center and a vertex (such as F_{L} or F_{R}) that is far away from the screen center. Certainly, during implementation of this embodiment of this application, an extension direction of the minor axis may alternatively be considered as a direction of the ellipse. However, only learning the center coordinates and the major and minor axes of the ellipse is not enough to uniquely determine the finger touch area. Therefore, the elliptical direction needs to be introduced.

Not limited to what is shown in FIG. 3, a finger touch area 211A of a left finger and a finger touch area 211B of a right finger do not necessarily appear at the same time.

### Identify the finger occlusion area

A part such as a pad or a tip of a finger directly touches the screen, making the finger touch area invisible to the user. In addition, another part of the finger also hovers close above the screen, causing poor visibility of a screen area below the part. The screen area may be referred to as a finger occlusion area in this specification, and does not include the finger touch area, to distinguish from the finger touch area.

Based on the finger touch area, at least one elliptical area may be extended outward, to construct a finger occlusion area. An area left after a largest nested elliptical area is subtracted from the extended elliptical area is the finger occlusion area. The extended elliptical area and the finger touch area share an elliptical direction, and a major-axis vertex that is close to the screen center. This also means that a center of the extended elliptical area and a center of the finger touch area are on a same straight line.

Specifically, as shown in FIG. 4, based on the finger touch area 211A of the left finger, elliptical areas S1 and S2 may be extended, to construct a left-finger occlusion area. "Based on the finger touch area 211A" may mean that the extended elliptical areas S1 and S2 and the finger touch area 211A share a same elliptical direction and share a major-axis vertex C_{L}. The major-axis vertex C_{L} is a major-axis vertex that is close to the screen center, which can reflect a projection location of a tip of the left finger on the screen.

Specifically, as shown in FIG. 4, based on the finger touch area 211B of the right finger, elliptical areas S1 and S2 may be extended, to construct a right-finger occlusion area. The extended elliptical areas S1 and S2 and the finger touch area 211B share a same elliptical direction and share a major-axis vertex C_{R}. The major-axis vertex C_{R} is a major-axis vertex that is close to the screen center, which can reflect a projection location of a tip of the right finger on the screen.

Because of a gradually raised three-dimensional structure of a pad of the finger, vertical distances from each point on the pad of the finger to the screen are different. A point or an area that is closer to the screen occludes the screen more seriously. Therefore, a plurality of extended elliptical areas that participate in constructing a left- or right-finger occlusion area may be nested layer by layer, for example, S1 is nested in S2; and are gradually enlarged, to construct multi-level finger occlusion areas with different occlusion degrees. An area left after a largest nested elliptical area is subtracted from an elliptical area forms a level-one finger occlusion area.

For example, an area left after a largest nested elliptical area (namely, the finger touch area 211A (211B)) is subtracted from an extended ellipse S1 forms an occlusion area of one level; and an area left after a largest nested elliptical area (namely, the elliptical area S1) is subtracted from an extended ellipse S2 forms an occlusion area of another level.

A finger occlusion area that is closer inward to a touch center has poorer visibility. The touch center is a center of the finger touch area. For example, as shown in FIG. 4, because of being closer inward to the touch area 212A, visibility of a finger occlusion area 212A is poorer than visibility of a finger occlusion area 213A. For another example, as shown in FIG. 4, because of being closer inward to the touch area 212B, visibility of a finger occlusion area 212B is poorer than visibility of a finger occlusion area 213B.

In particular, the finger touch area 211A (211B) may be considered as a first-level occlusion area with a highest occlusion degree.

Based on that invisibility degrees of the areas 211A (211B), 212A (212B), and 213A (213B) shown in FIG. 4 are in descending order, the areas may be denoted as a first-level occlusion area, a second-level occlusion area, and a third-level occlusion area, and differentiated load-reducing rendering may be subsequently performed on the occlusion areas at all levels.

A size of an extended outermost elliptical area used to construct a finger occlusion area may be restricted by a finger width W and a screen boundary. Specifically, a sum of two minor axes of the outermost elliptical area may be equal to or approximate to the finger width W, and the elliptical area does not exceed the screen boundary. Herein, approximate may mean less than the finger width W, but with a small difference. For example, the difference is within 2 millimeters. In particular, when only one elliptical area is extended to construct a finger occlusion area, the elliptical area is an outermost elliptical area. A sum of two minor axes of the elliptical area may be equal to or approximate to the finger width W. The finger width W may be a statistical average value of widths of human thumbs. The finger width W may alternatively be estimated based on a width of the finger touch area (for example, a sum of two minor axes of the area 211A), and the two widths are in a proportional relationship. This is because usually a wider touch area formed by a finger in contact with a screen may reflect a wider finger to some extent. To improve estimation accuracy of the finger width W, parameters such as a gender, an age, and a weight of the user may be further considered. These parameters may be extracted from personal information of a login user of the electronic device 100. A manner of obtaining these parameters and how to use these parameters to help estimate the finger width are not limited in this embodiment of this application.

### Identify the palm occlusion area

The finger directly touches the screen, making the finger touch area invisible to the user. In addition, another part other than the finger hovers close above the touchscreen, causing poor visibility of a screen area below the part. A base of the thumb and a palm part connected to the base of the thumb usually may also occlude the lower left corner area and the lower right corner area of the screen. As a result, a lower left corner area and a lower right corner area of the game picture may have poor visibility.

In this specification, a screen area that is occluded by the base of the thumb and the palm part connected to the base of the thumb may be referred to as a palm occlusion area. Herein, the "palm" in the "palm occlusion area" is not limited to a palm strictly defined in the field of human anatomy. This specification only uses this name to distinguish from the finger occlusion area.

Based on the finger touch area, a rectangular area R or a triangular area T may be extended, to construct a palm occlusion area. The palm occlusion area may be an area that is in the rectangular area R (or the triangular area T) and that is not covered by the finger touch area or the finger occlusion area.

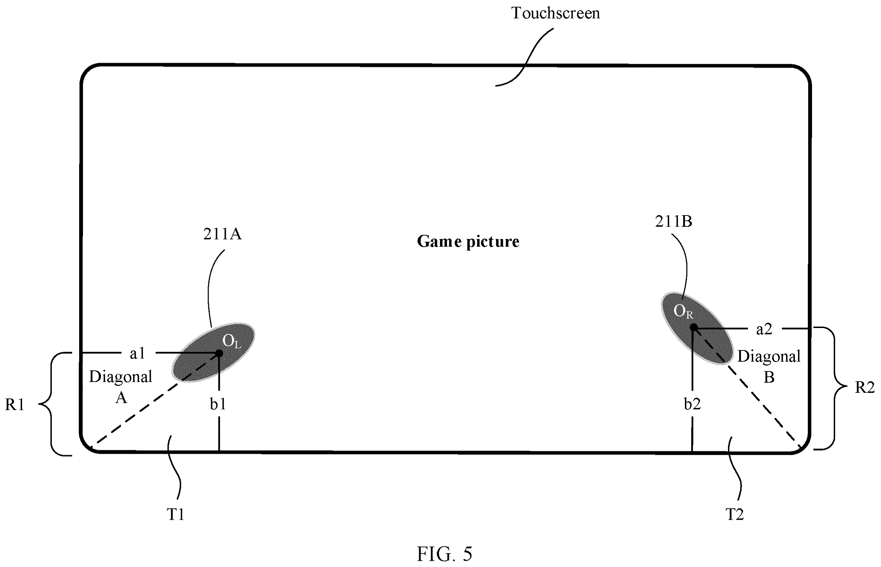

Specifically, as shown in FIG. 5, based on the finger touch area 211A of the left finger, a rectangular area R1 or a triangular area T1 may be extended. "Based on the finger touch area 211A" may mean that a diagonal A of the rectangular area R1 is a line segment from a center O_{L} of the area 211A to a vertex of the lower left corner of the screen, or a hypotenuse of the triangular area T1 is the line segment.

Specifically, as shown in FIG. 5, based on the finger touch area 211B of the right finger, a rectangular area R2 or a triangular area T2 may be extended. "Based on the finger touch area 211B" may mean that a diagonal B of the rectangular area R2 is a line segment from a center O_{R} of the area 211B to a vertex of the lower right corner of the screen, or a hypotenuse of the triangular area T2 is the line segment.

The rectangular areas R1 and R2 may not be mathematically strict rectangles, but are approximate rectangles. Sides a1, b1, a2, and b2 of the rectangles may be modeled or simulated to be curved by taking into account natural curvature of the base of the human thumb and a part of the palm connected to the base of the human thumb. Similarly, the triangular areas T1 and T2 may not be mathematically strict triangles, but may be approximate triangles.

The palm occlusion area may be an area that is in the rectangular area R (or the triangular area T) and that is not covered by the finger touch area or the finger occlusion area.

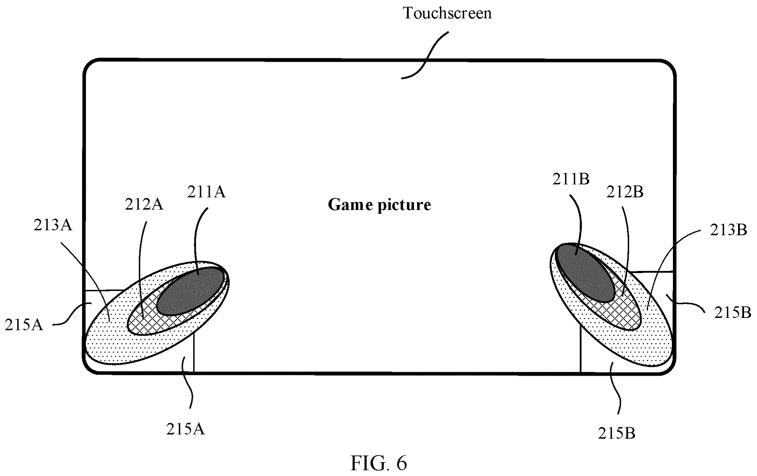

As shown in FIG. 6, a palm occlusion area 215A of a left palm is an area that is in the rectangular area R1 (or the triangular area T1) and that is not covered by the finger touch area 211A of the left finger and the finger occlusion areas 212A and 213A of the left finger. Similarly, a palm occlusion area 215B of a right palm is an area that is in the rectangular area R2 (or the triangular area T2) and that is not covered by the finger touch area 211B of the right finger and the finger occlusion areas 212B and 213B of the right finger.

It can be learned that a closer distance between the center O_{L} and the lower left corner of the screen indicates a smaller left-palm occlusion area 215A, and a closer distance between the center O_{R} and the lower right corner of the screen indicates a smaller right-palm occlusion area 215B.

When a distance between the center of the touch area and the left or lower right corner of the screen is small enough, a left- or right-palm occlusion area may not be considered. This indicates that, in this case, the left or right finger does not fully extend toward a middle of the screen, and therefore the left or right palm does not occlude the screen. During specific implementation, when a distance between the center O_{L} and the lower left corner of the screen is less than a specific distance, the left-palm occlusion area 215A may not be considered. Similarly, when a distance between the center O_{R} and the lower right corner of the screen is less than a specific distance, the right-palm occlusion area 215B may not be considered. The specific distance may be a statistical average value of projection lengths on the screen when a human thumb naturally bends or stretches.

An occlusion degree of the palm occlusion area is lower than an occlusion degree of the finger touch area, and differentiated load-reducing rendering may be subsequently performed on different areas. Whether an occlusion degree of the palm occlusion area is higher or lower than that of the finger occlusion area is not limited in this embodiment of this application, and may be determined according to an actual application requirement.

### Differentiated load-reducing rendering

After the occlusion areas are identified by level, the load-reducing rendering method provided in this embodiment of this application may further adapt to a differentiated load-reducing rendering means, thereby reducing GPU-based rendering load without affecting the user's gaming experience.

The load-reducing rendering means may include but is not limited to resolution reduction, image texture reduction, feature point clipping, rendering culling, and the like. Resolution reduction means to reduce image definition, image texture reduction means to reduce image details, feature point clipping means to reduce image feature points, and rendering culling means not to render a culling area. In addition, the load-reducing rendering means may further include: performing variable resolution rendering (variable rate shading, VRS) on areas with different occlusion degrees. VRS can shade two or four pixels as a group during rendering, and reuse a shading result for surrounding pixels. In this way, GPU computing load is reduced by selectively rendering and shading a picture.

In this embodiment of this application, differentiated load-reducing rendering may mean that more-load-reducing rendering may be performed on a picture of an occlusion area that is closer inward to the touch center. The touch center is a center of the finger touch area. In this way, load-reducing rendering of a larger degree can be implemented on an occlusion area with a higher occlusion degree. Rendering culling may be considered as load-reducing rendering to a maximum extent, and consequently, no content is displayed. This is applicable to the finger touch area. Specifically, rendering culling may be performed on a picture of the finger touch area, and one or more of the following processing may be performed on a picture of the finger occlusion area: image texture reduction, image resolution reduction, feature point reduction, and shading rate reduction.

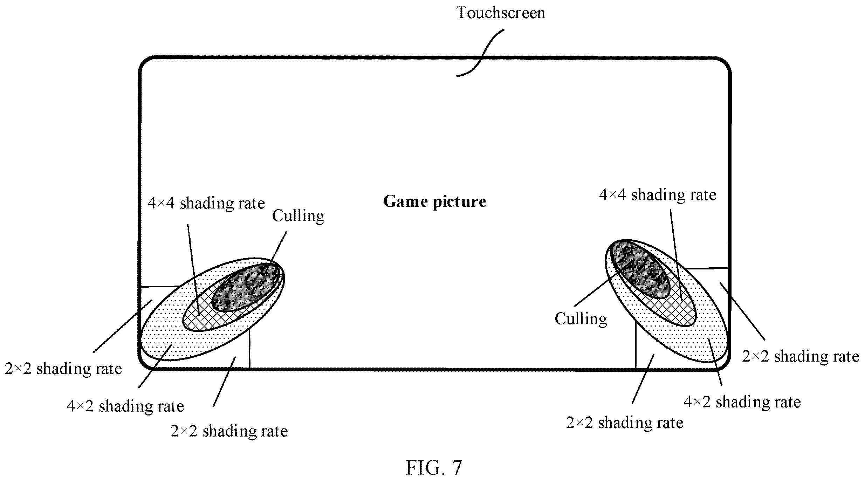

For example, as shown in FIG. 7, occlusion degrees of the finger touch area 211A, the finger occlusion area 212A, and the finger occlusion area 213A are in descending order. It is also assumed that an occlusion degree of the palm occlusion area 215A is lower than an occlusion degree of the finger occlusion area 213A. In this case, as shown in FIG. 7, a load-reducing rendering means of sequentially decreasing degrees may be implemented on the finger touch area 211A, the finger occlusion area 212A, the finger occlusion area 213A, and the palm occlusion area 215A. Rendering culling is implemented on the finger touch area 211A; and VRS is implemented on the finger occlusion area 212A, the finger occlusion area 213A, and the palm occlusion area 215A, which uses a 4×4 shading rate, a 4×2 shading rate, and a 2×2 shading rate respectively.

This differentiated load-reducing rendering means not only can reduce the GPU-based rendering load, but also can more finely present different rendering effects for all areas with different occlusion degrees, without affecting the user's gaming experience.

The load-reducing rendering method provided in this embodiment of this application can implement development of a game application without awareness, and can be widely applied to various game applications without requiring a developer of the game application to change a function. This is attributed to the software system architecture of the electronic device 100 provided in this embodiment of this application. In the software system architecture, a path between the touch information (carried in the input event) and the image processing module is designed.

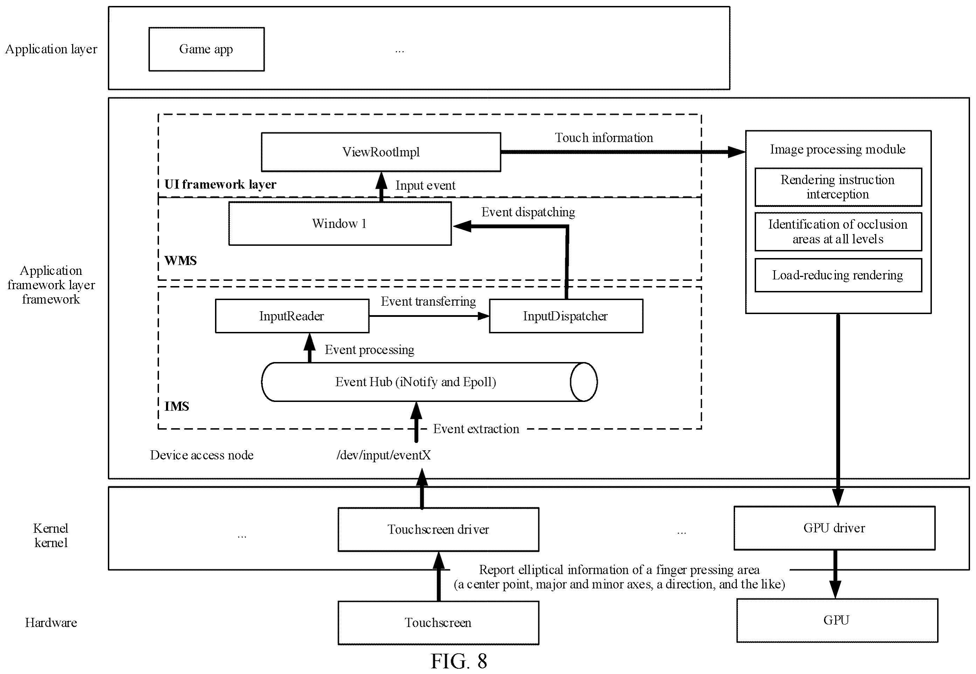

FIG. 8 shows an example of a software system architecture of the electronic device 100.

As shown in FIG. 8, the software system architecture of the electronic device 100 may include an application (application, APP) layer, an application framework (framework, FWK) layer, and a kernel (kernel) layer. Each layer is described in detail below.

The application layer may include one or more applications, for example, a game application. The game application can provide game picture content.

The application framework layer may include an input management service (input management service, IMS), a window management service (window management service, WMS), a UI framework layer, and an image processing module.

The IMS may include an event hub (Event Hub), an input reader (inputReader), and an input dispatcher (inputDispatcher), which cooperate with each other to transfer an input event reported by a touchscreen and dispatch the input event to an appropriate window, for example, a window 1 of the game application. The Event Hub can listen to a device node (for example, /dev/input/eventX) through iNotify and Epoll mechanisms and read an original input event of the device node. The InputReader cyclically reads the original input event from the Event Hub, processes the original input event, and sends a processed event to the InputDispatcher. The InputDispatcher stores information about all windows in the WMS (where the WMS updates the window information to the InputDispatcher in real time). In this way, the InputDispatcher can dispatch the input event to the appropriate window.

The WMS may be used to manage all windows (windows) in a system, for example, a window 1. The window 1 may be a window of the game application, and may be established (instantiated) when the game application is started. With instantiation of the window 1, a ViewRootImpl object can be instantiated at the UI framework layer. The ViewRootImpl object can be used to listen to the input event dispatched by the InputDispatcher to the window 1. In this embodiment of this application, the ViewRootImpl object is improved. After listening to the input event dispatched by the InputDispatcher to the window 1, the improved ViewRootImpl object may further transfer touch information carried in the input event to the image processing module. In addition, because the input event is listened to by the ViewRootImpl object, the game application also receives the input event, and learns whether a user touches a screen by using a finger.

After receiving the touch information transferred by the ViewRootImpl object, the image processing module may be configured to: intercept a rendering instruction, identify occlusion areas at all levels, and perform load-reducing rendering. For specific implementation of identifying the occlusion areas at all levels and performing load-reducing rendering, refer to descriptions above and below. Details are not described herein again.

In addition to the IMS, the WMS, and the image processing module, the application framework layer may further include a layer synthesizer (SurfaceFlinger). The SurfaceFlinger may be configured to: perform layer synthesis processing on a picture frame that is rendered by a GPU, generate an interface including the picture frame, and send the interface including the picture frame to a display for display.

The kernel layer may include a touchscreen driver, a GPU driver, and the like. The touchscreen driver may be configured to: control the touchscreen to work and receive a touch signal reported by the touchscreen. The GPU driver may be configured to control the GPU to perform a rendering operation. When it is detected that the user touches the touchscreen by using the finger, the touchscreen may simulate a finger pressing area into an elliptical area, and report elliptical information to the touchscreen driver, for example, information such as center (O') coordinates, major and minor axes, and an elliptical direction of an ellipse. The elliptical information used as touch information is carried in an input event reported to the touchscreen driver.

In addition to the foregoing layers, the system architecture of the electronic device 100 may further include a local service layer. The local service layer may include one or more graphics libraries, for example, an open graphics library (open graphics library, OpenGL) and an open graphics library for embedded systems (open graphics library for embedded systems, OpenGL ES). A graphics drawing interface included in the graphics library may be invoked to configure a GPU-rendered picture frame.

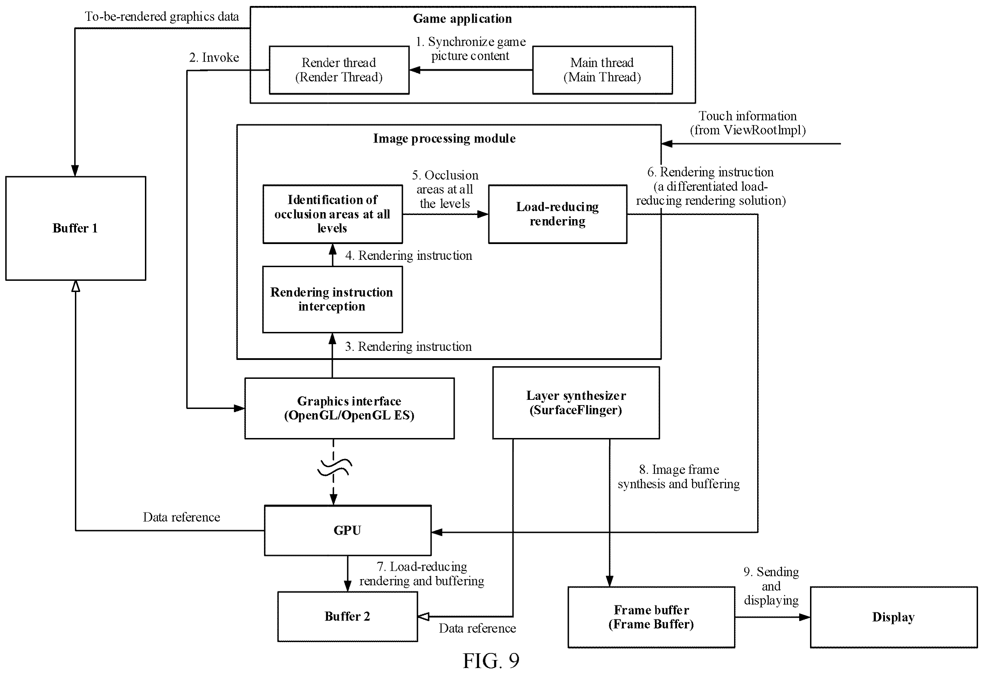

Based on the software system architecture shown by way of example in FIG. 8, FIG. 9 shows cooperation between software modules, and in particular, a process of intercepting a rendering instruction, identifying occlusion areas at all levels, and performing load-reducing rendering by the image processing module. The game application may include a main thread (Main Thread) and a render thread (Render Thread). The image processing module may include a rendering instruction interception module, a module of identifying occlusion areas at all levels, and a load-reducing rendering module.

An interaction process of each module may be as follows.
1. The main thread of the game application may synchronize game picture content to the render thread.
2. After obtaining the game picture content, the render thread may invoke a first graphics drawing interface in the graphics library (for example, the OpenGL or the OpenGL ES) to deliver a rendering instruction.

In addition, to-be-rendered game picture content of the game application may be buffered, for example, temporarily stored in a buffer 1, to be read during GPU-based rendering. The buffer 1 may be a partial buffer area on the memory 120 in the electronic device 100.

3. The first graphics drawing interface in the graphics library (for example, the OpenGL) is invoked to forward the rendering instruction to the rendering instruction interception module.

Invoking the first graphics drawing interface in the graphics library does not directly transfer the rendering instruction from the render thread to the GPU, but first forwards the rendering instruction to the rendering instruction interception module in the image processing module. This is rendering instruction interception mentioned in this specification.

Specifically, rendering instruction interception may occur in a period in which the image processing module receives the touch information transferred by the ViewRootImpl object, and the user touches the screen by using the finger in this period. In other words, in a period in which the user touches the screen by using the finger, the game application may invoke the first graphics drawing interface in the graphics library. In addition, in a period in which the user does not touch the screen by using the finger, the game application may invoke a second graphics drawing interface in the graphics library, to directly transfer the rendering instruction to the GPU. This is common rendering mentioned in this specification, and is relative to the rendering manner of load-reducing rendering.

In the graphics library, the first graphics drawing interface is a graphics drawing interface introduced to intercept the rendering instruction in this embodiment of this application, and the second graphics drawing interface is a conventional graphics drawing interface provided by the graphics library.

4. After receiving the rendering instruction, the rendering instruction interception module may further transfer the rendering instruction to the module of identifying the occlusion areas at all levels.

The module of identifying the occlusion areas at all levels may identify the occlusion areas at all levels based on touch information, for example, information such as center (O') coordinates, major and minor axes, and an elliptical direction of an ellipse: a finger touch area, a finger occlusion area, and a palm occlusion area, to lay a foundation for subsequent differentiated load-reducing rendering. For details about how to identify the occlusion areas at all levels, refer to related content above or below. Details are not described herein again.

The touch information may be transferred by the ViewRootImpl object to the image processing module. For details, refer to the related content in the embodiment in FIG. 8. Details are not described herein again.

5. After identifying the occlusion areas at all levels, the module of identifying the occlusion areas at all levels may notify the load-reducing rendering module of an identification result (namely, the occlusion areas at all levels).

Herein, the identification result may include indication information, such as a location, a size, and a shape, of the occlusion areas at all levels (for example, the finger touch area, the finger occlusion area, and the palm occlusion area), where the indication information indicates which pixels are covered by the occlusion areas at all levels on the screen.

6. After learning the occlusion areas at all levels, the load-reducing rendering module may adapt differentiated load-reducing rendering means to the occlusion areas at all levels, to obtain a differentiated load-reducing rendering solution, and send the rendering instruction to the GPU. The rendering instruction may carry the differentiated load-reducing rendering solution.

The differentiated load-reducing rendering solution may be used to perform load-reducing rendering of a higher degree on an occlusion area with a higher occlusion degree, and perform load-reducing rendering of a lower degree on an occlusion area with a lower occlusion degree. For example, load-reducing rendering of rendering culling is performed in the area 211A in FIG. 4, and variable-shading-rate load-reducing rendering of 4×4, 4×2, and 2×2 is performed in the areas 212A, 213A, and 215A respectively. For details about how to implement differentiated load-reducing rendering, refer to related content above or below. Details are not described herein again.

7. After receiving the rendering instruction sent by the load-reducing rendering module, the GPU may read the to-be-rendered game picture content from the buffer 1, render the game picture content according to the differentiated load-reducing rendering solution, and finally store a picture frame obtained through rendering in a buffer 2.

The buffer 2 may be a buffer area specified by the rendering instruction, and may be a partial buffer area on the memory 120 in the electronic device 100.

8. The layer synthesizer (SurfaceFlinger) extracts the rendered picture frame from the buffer 2 to perform layer synthesis. Then, the SurfaceFlinger sends the picture frame after layer synthesis to a frame buffer (Frame Buffer) for storage, to complete sending and displaying.

The frame buffer is a segment of storage space, may be located in a display memory, or may be located in a memory, and is configured to store rendering data that is processed by a graphics chip or that is to be extracted. Content in the frame buffer corresponds to interface display on the display 194, and may be simply understood as a buffer corresponding to content displayed on the display 194. Modifying the content in the frame buffer is modifying the content on the display 194.

Specifically, each time after receiving a vertical synchronization (vsync) signal, the SurfaceFlinger extracts a picture frame from the buffer 2 to perform layer synthesis, and sends the picture frame to the display for refreshing and displaying. The vsync signal is a synchronization signal that is generated by a hardware module corresponding to the display and whose period is consistent with a screen refresh rate. The screen refresh rate indicates a quantity of times a display on an electronic device refreshes a displayed picture frame within 1 second. Usually, the refresh rate of the display on the electronic device is related to a fixed parameter of the display, and is a fixed value. For example, the refresh rate may be 60 hertz (Hz).

In the software system architecture provided in this embodiment of this application, a path between the touch information (carried in the input event) and the image processing module is designed to further implement a low latency, so that user experience of load-reducing rendering is the same as that of common rendering.

Usually, a game uses triple buffering (triple buffering). Three frames are required for rendering to sending and displaying, among which two frames are buffered. For a 60-frame game (with a frame interval of about 16.7 milliseconds), triple buffering causes a latency of about 50 milliseconds. For example, a latency from a user touch operation to display of a game picture on a screen does not exceed 80 milliseconds. This requires that a total of a latency of transferring touch information to the image processing module and a processing latency of intercepting a rendering instruction, identifying occlusion areas at all levels, and outputting a differentiated load-reducing rendering solution by the image processing module does not exceed 30 milliseconds. A fast path between the touch information and the image processing module provided in this embodiment of this application may meet this requirement. In this embodiment of this application, time for transferring the touch information to the image processing module may be less than 25 milliseconds, and processing time of the image processing module does not exceed 5 milliseconds. However, for a low-frame-rate game, using a 30-frame game as an example, because a frame interval has reached 33 milliseconds, rendering to sending and displaying in triple buffering takes about 100 milliseconds, and a latency is quite obvious. Considering user experience, the electronic device may choose not to perform load-reducing rendering, but only perform common rendering.

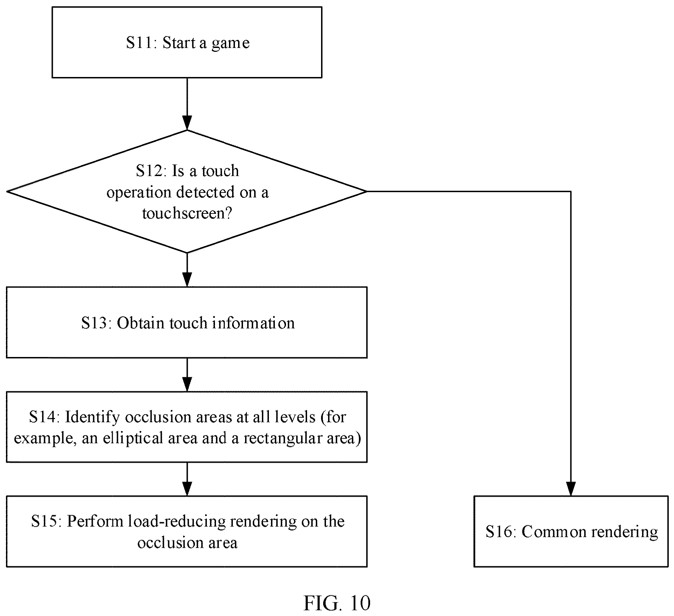

FIG. 10 shows an overall procedure of a load-reducing rendering method according to an embodiment of this application. Details are provided below.

S11: Start a game.

An electronic device may start a game application because of a user operation (for example, an operation of tapping a desktop icon of the game application), needs to render a game picture provided by the game application, and displays, on a display, the game picture provided by the game application.

As described above, when a user holds the electronic device (for example, in a landscape mode) to play the game, some areas of a game picture displayed on a screen are occluded by a hand part such as a thumb of the user. Usually, a lower left corner area of the screen is designed as a wheel area, and a lower right corner area of the screen is designed as a skill area. The user needs to operate and control the wheel area and the skill area, which may occlude the screen. As a result, this part of game picture is invisible or has poor visibility. For example, a pad of a thumb touches and presses a touchscreen, making an area pressed by the pad invisible to the user. In addition, a part, of the thumb, other than the pad hovers close above the touchscreen, causing poor visibility of a game picture area below the part. In addition, a base of the thumb and a palm part connected to the base of the thumb usually also touch or occlude the lower left corner area and the lower right corner area of the screen. As a result, a lower left corner area and a lower right corner area of the game picture are invisible to the user or have poor visibility.

According to the load-reducing rendering method provided in this embodiment of this application, these occluded areas are accurately identified by level, to lay a foundation for subsequent differentiated load-reducing rendering. The game application is not limited thereto. This embodiment of this application may be further applicable to another application that provides a graphical user interface and receives a touch input of a user, to reduce rendering load of the graphical user interface when the user touches a screen by using a finger.

S12: The electronic device may determine whether a touch operation is detected on the touchscreen, and if the touch operation is detected, perform S13 to S15; or perform S16. To be specific, in a period in which the user touches the screen by using the finger, the electronic device performs load-reducing rendering; or in a period in which the user does not touch the screen by using the finger, the electronic device performs common rendering.

The game picture displayed on the screen may further display a direction wheel and a skill key. The direction wheel may be used to control movement of a character or another subject in the game, and the skill key may be used to implement control such as game skill launching. The direction wheel and the skill key may be respectively distributed in a lower left corner and a lower right corner of the screen, or may be respectively distributed in a lower right corner and a lower left corner of the screen.

The touch operation may be specifically an operation performed on the direction wheel or the skill key. To be specific, the electronic device may specifically trigger to perform S13 to S15 when detecting the touch operation performed on the direction wheel or the skill key, or when detecting the touch operation in the lower right corner and the lower left corner of the screen.

In addition, before determining whether to perform S13 to S15 or S16, the electronic device may further determine whether the game application is a low-frame-rate game application, for example, a 30-frame game. If the game application is not a low-frame-rate game application, the electronic device determines to perform S13 to S15. Otherwise, the electronic device performs S16.

In this specification, whether a game application is a low-frame-rate game application may be determined according to a requirement of a latency (a maximum latency Tₘₐₓ) from a user touch operation to display of a game picture on a screen. Specifically, if a latency of performing triple buffering by a game application reaches or exceeds Tₘₐₓ, the game application may be considered as a low-frame-rate game application. Alternatively, more strictly, if a latency of performing triple buffering by a game application exceeds Tₘₐₓ-Tᵣₑₛₑᵣᵥₑ, the game application may be considered as a low-frame-rate game application. Tᵣₑₛₑᵣᵥₑ indicates a latency reserved for transferring touch information to the image processing module and a processing latency of the image processing module, for example, 30 milliseconds. A length of Tᵣₑₛₑᵣᵥₑ is affected by processing performance of related hardware, and may be adjusted based on an actual implementation scenario. The latency of performing triple buffering by the game application is determined by a frame rate R of the game application, and is equal to 3*(1000/R) milliseconds.

S13: The electronic device may obtain the touch information.

The touch information may be, for example, information such as a location, a shape, and a size of a finger touch area, and the information may be carried in a touch event. Based on the touch information, the electronic device may identify the finger touch area. Specifically, as shown in FIG. 3, the finger touch area may be simulated as an ellipse, and center (O') coordinates, major and minor axes, and an elliptical direction of the ellipse are used as the touch information. The elliptical direction may be an extension direction of the major axis, and the direction may be specifically represented by an included angle between the major axis and a side (for example, a side XY) of the screen.

S14: The electronic device may identify occlusion areas at all levels based on the touch information.

The occlusion areas at all levels may include the finger touch area, a finger occlusion area, and a palm occlusion area.

The finger touch area may be identified based on a touch event reported by the screen (which is specifically a touchscreen). The finger touch area is a screen area that is directly touched by a finger. A game picture displayed in the finger touch area is invisible to the user, and has a highest occlusion degree and poorest visibility. The finger touch area may be simulated as an ellipse.

There may be N (where N is a positive integer) finger occlusion areas, which may be constructed by N elliptical areas extended outward based on the finger touch area. The extended elliptical area and the finger touch area have a same elliptical direction, and major-axis vertices that are close to a screen center and that are of the extended elliptical area and the finger touch area coincide. One finger occlusion area is an area left after a largest nested elliptical area is subtracted from one extended elliptical area.

When N=1, the largest elliptical area in the extended elliptical area is the finger touch area. For example, a finger occlusion area 212A in FIG. 4 is an area left after a finger touch area (namely, a largest nested elliptical area in an elliptical area S1) is subtracted from the extended elliptical area S1.

When N≥2, the extended N elliptical areas that participate in constructing a left- or right-finger occlusion area may be nested layer by layer, and are gradually enlarged, to construct multi-level finger occlusion areas with different occlusion degrees. An area left after a largest nested elliptical area is subtracted from an elliptical area forms a level-one finger occlusion area. For example, a finger occlusion area 212A in FIG. 4 is an area left after a finger touch area is subtracted from an extended elliptical area S1, and a finger occlusion area 213A is an area left after the elliptical area S1 (namely, a largest nested elliptical area in an elliptical area S2) is subtracted from the extended elliptical area S2.

A finger occlusion area that is closer inward to a touch center has poorer visibility. The touch center is a center of the finger touch area.

Specifically, as shown in FIG. 4, areas 212A and 213A respectively left after largest nested ellipses are subtracted from elliptical areas S1 and S2 that are extended based on a finger touch area 211A of a left finger are left-finger occlusion areas of two levels, with different occlusion degrees. The extended elliptical areas S1 and S2 and the touch area 211A share a same elliptical direction and share a major-axis vertex C_{L}.

Specifically, as shown in FIG. 4, areas 212B and 213B respectively left after largest nested ellipses are subtracted from elliptical areas S1 and S2 that are extended based on a finger touch area 211B of a right finger are right-finger occlusion areas of two levels, with different occlusion degrees. The extended elliptical areas S1 and S2 and the touch area 211B share a same elliptical direction and share a major-axis vertex C_{R}.

A size of an extended outermost elliptical area used to construct a finger occlusion area may be restricted by a finger width W and a screen boundary. Specifically, a sum of two minor axes of the outermost elliptical area may be equal to or approximate to the finger width W, and the elliptical area does not exceed the screen boundary. In particular, when only one elliptical area is extended to construct a finger occlusion area, the elliptical area is an outermost elliptical area. A sum of two minor axes of the elliptical area may be equal to or approximate to the finger width W.

The palm occlusion area may be constructed by a rectangular area R or a triangular area T that is extended based on the finger touch area. The palm occlusion area may be an area that is in the rectangular area R (or the triangular area T) and that is not covered by the finger touch area or the finger occlusion area.

Specifically, as shown in FIG. 5, in a rectangular area R1 or a triangular area T1 that is extended based on the finger touch area 211A of the left finger, an area that is not covered by the finger touch area 211A of the left finger and the finger occlusion areas 212A and 213A of the left finger is a palm occlusion area 215A of a left palm. "Based on the finger touch area 211A" may mean that a diagonal A of the rectangular area R1 is a line segment from a center O_{L} of the area 211A to a vertex of the lower left corner of the screen, or a hypotenuse of the triangular area T1 is the line segment.

Specifically, as shown in FIG. 5, in a rectangular area R2 or a triangular area T2 that is extended based on the finger touch area 211B of the right finger, an area that is not covered by the finger touch area 211A of the left finger and the finger occlusion areas 212A and 213A of the left finger is a palm occlusion area 215B of a right palm. "Based on the finger touch area 211B" may mean that a diagonal B of the rectangular area R2 is a line segment from a center O_{R} of the area 211B to a vertex of the lower right corner of the screen, or a hypotenuse of the triangular area T2 is the line segment.

When a distance between the center of the touch area and the left or lower right corner of the screen is small enough, a left- or right-palm occlusion area is not considered. In this case, the left or right finger does not fully extend toward a middle of the screen, and therefore the left or right palm does not occlude the screen.

S15: The electronic device may perform load-reducing rendering on a picture of the occlusion areas at all levels.

Specifically, the electronic device may perform more-load-reducing rendering on a picture of an occlusion area that is closer inward to the touch center. A load-reducing rendering means may include but is not limited to one or more of the following: rendering culling, image texture reduction, image resolution reduction, feature point reduction, and shading rate reduction.

For example, the electronic device may implement resolution reduction of a greater degree, image texture reduction of a greater degree, and clipping of more feature points for an occlusion area that is closer inward to the touch center.

Rendering culling may be considered as load-reducing rendering to a maximum extent, and consequently, no content is displayed. Specifically, the electronic device may perform load-reducing rendering such as rendering culling on the finger touch area, and perform one or more of the following processing on pictures of the finger occlusion area and the palm occlusion area: resolution reduction, image texture reduction, and feature point clipping. The finger occlusion area that is closer inward to the touch center may indicate that resolution may be reduced, image texture may be reduced, and more feature points may be clipped to a greater extent.

In addition, the load-reducing rendering means may further include: implementing VRS on areas with different occlusion degrees. For example, finger occlusion areas with different occlusion degrees may use different shading rates. A picture of a finger occlusion area that is closer inward to the touch center uses a lower shading rate, and a picture of a finger occlusion area that is closer to a periphery uses a higher shading rate. If it is considered that an occlusion degree of the palm occlusion area is higher than an occlusion degree of the finger occlusion area, a shading rate used by the palm occlusion area may be lower than a shading rate used by the finger occlusion area.

In this way, the user may observe that, after load-reducing rendering is performed, the picture of the occlusion areas at all levels is more blurred than a picture of another screen area in which load-reducing rendering is not performed. In addition, a picture of an area that is closer inward to the touch center is more blurred. This is because load-reducing rendering is performed on these occlusion areas, and a picture of the occlusion area is inferior to that of another screen area in which load-reducing rendering is not performed at one or more aspects such as image texture, resolution, a quantity of feature points, and a shading rate.

S16: The electronic device may perform common rendering.

For common rendering, refer to the related description in the foregoing embodiments. Details are not described herein again.

An embodiment of this application further provides a computer-readable storage medium. The computer-readable storage medium stores a computer program. When the computer program is executed by a processor, steps in the foregoing method embodiments may be implemented.

An embodiment of this application further provides a computer program product. When the computer program product runs on an electronic device, the electronic device is enabled to implement steps in the foregoing method embodiments.

An embodiment of this application further provides a chip system. The chip system includes a processor. The processor is coupled to a memory, and the processor executes a computer program stored in the memory, to implement steps in any method embodiment of this application. The chip system may be a single chip or a chip module including a plurality of chips.

The term "user interface (user interface, UI), which is referred to as an interface briefly", in the specification and the accompanying drawings of this application is a medium interface for interaction and information exchange between an application or an operating system and a user, and implements conversion between an internal form of information and a form acceptable to the user. A user interface of the application is source code written in a specific computer language, for example, Java or an extensible markup language (extensible markup language, XML). The interface source code is parsed and rendered on a terminal device, and finally presented as user-recognizable content, for example, a control such as a picture, a text, or a button. A control (control) is also referred to as a widget (widget), and is a basic element of the user interface. Typical controls include a toolbar (toolbar), a menu bar (menu bar), a text box (text box), a button (button), a scrollbar (scrollbar), an image, and text. An attribute and content of a control on the interface are defined by using a tag or a node. For example, in an XML file, the control on the interface is defined by using a node such as <Textview>, <ImgView>, or <VideoView>. One node corresponds to one control or one attribute on the interface. After being parsed and rendered, the node is presented as user-visible content. In addition, interfaces of many applications such as a hybrid application (hybrid application) usually further include a web page. The web page, also referred to as a page, may be understood as a special control embedded in an application interface. The web page is source code written in a specific computer language, for example, a hypertext markup language (hypertext markup language, HTML), a cascading style sheet (cascading style sheet, CSS), or JavaScript (JavaScript, JS). The source code of the web page may be loaded and displayed as user-recognizable content by a browser or a web page display component with a function similar to that of the browser. Specific content included in the web page is also defined by using a tag or a node in the source code of the web page. For example, an element and an attribute of the web page are defined in the HTML by using <p>, <img>, <video>, and <canvas>.

A frequently-used representation form of the user interface is a graphical user interface (graphical user interface, GUI), and is a user interface that is displayed in a graphical manner and that is related to a computer operation. It may be an interface element such as an icon, a window, or a control displayed on a display of an electronic device. The control may include a visual interface element such as an icon, a button, a menu, a tab, a text box, a dialog box, a status bar, a navigation bar, and a widget.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some of the procedures of the methods in embodiments may be implemented by a computer program instructing relevant hardware. The program may be stored in a computer-readable storage medium. When the program runs, the procedures of the methods in embodiments may be included. The foregoing storage medium includes any medium that can store program code, such as a ROM, a random access memory RAM, a magnetic disk, or an optical disc.

The foregoing embodiments are merely intended to describe the technical solutions of this application, but are not intended to limit this application. Although this application is described in detail with reference to the foregoing embodiments, a person of ordinary skill in the art should understand that the technical solutions described in the foregoing embodiments may still be modified or some technical features thereof may be equivalently replaced. These modifications or replacements do not enable essence of a corresponding technical solution to depart from the scope of the technical solutions of embodiments of this application.

## Claims

1. A load-reducing rendering method, comprising:
displaying, by an electronic device on a screen, a picture provided by a first application;
detecting, by the electronic device, a touch operation of a finger of a user on the screen, and obtaining touch information of the touch operation;
determining, by the electronic device, a multi-level occlusion area based on the touch information, wherein the multi-level occlusion area comprises a finger touch area and a finger occlusion area, and the finger occlusion area surrounds a periphery of the finger touch area; and
performing, by the electronic device, load-reducing rendering on a picture of the multi-level occlusion area, wherein more-load-reducing rendering is performed on a picture of an occlusion area that is closer inward to a touch center, the touch center is a center of the finger touch area, and the load-reducing rendering comprises one or more of the following: rendering culling, image texture reduction, image resolution reduction, feature point reduction, and shading rate reduction.

2. The method according to claim 1, wherein that more-load-reducing rendering is performed on the picture of the occlusion area that is closer inward to the touch center comprises: rendering culling is performed on a picture of the finger touch area, and one or more of the following processing is performed on a picture of the finger occlusion area: image texture reduction, image resolution reduction, feature point reduction, and shading rate reduction.

3. The method according to claim 1 or 2, wherein the first application comprises a game application, the picture further displays a direction wheel and a skill key, the touch operation acts on the direction wheel or the skill key, and the direction wheel and the skill key are respectively distributed in a lower left corner and a lower right corner of the screen or are respectively distributed in a lower right corner and a lower left corner of the screen.

4. The method according to any one of claims 1 to 3, wherein the finger touch area is an elliptical area, the touch information comprises center coordinates, major and minor axes, and an elliptical direction of the elliptical area, and the elliptical direction is an extension direction of the major axis.

5. The method according to claim 4, wherein N finger occlusion areas are comprised, wherein N is a positive integer, the N finger occlusion areas are constructed based on N elliptical areas extended from the finger touch area, one finger occlusion area is an area left after a largest nested elliptical area is subtracted from one extended elliptical area, and the extended elliptical area and the finger touch area have a same elliptical direction, and a same major-axis vertex that is close to a screen center.

6. The method according to claim 5, wherein when N=1, the largest nested elliptical area in the extended elliptical area is the finger touch area.

7. The method according to claim 5 or 6, wherein when N is greater than or equal to 2, the extended N elliptical areas are nested layer by layer, and are gradually enlarged.

8. The method according to claim 7, wherein a sum of two minor axes of an extended outermost elliptical area is equal to a width W of a first finger, or a difference between the sum of the two minor axes of the extended outermost elliptical area and the width W of the first finger is less than a first value; and the first finger comprises a thumb.

9. The method according to claim 7 or 8, wherein the N finger occlusion areas use different shading rates, wherein a game picture of a finger occlusion area that is closer inward to the touch center uses a lower shading rate.

10. The method according to any one of claims 1 to 9, wherein the multi-level occlusion area further comprises a left-palm occlusion area; and
the left-palm occlusion area is an area that is in a rectangular area or a triangular area in the lower left corner of the screen and that is not covered by a finger touch area of a left finger and a finger occlusion area of the left finger, wherein a diagonal of the rectangular area in the lower left corner is a connection line segment from a center of the left-finger touch area to the lower left corner of the screen, and a hypotenuse of the triangular area is the connection line segment.

11. The method according to any one of claims 1 to 10, wherein the multi-level occlusion area further comprises a right-palm occlusion area; and
the right-palm occlusion area is an area that is in a rectangular area or a triangular area in the lower right corner of the screen and that is not covered by a right-finger touch area of a right finger and a right-finger occlusion area of the right finger, wherein a diagonal of the rectangular area in the lower right corner is a connection line segment from a center of the right-finger touch area to the lower right corner of the screen, and a hypotenuse of the triangular area is the connection line segment.

12. An electronic device, comprising one or more processors and one or more memories, wherein the one or more memories are coupled to the one or more processors, the one or more memories are configured to store computer program code, and the computer program code comprises computer instructions; and when the one or more processors execute the computer instructions, the method according to any one of claims 1 to 11 is performed.

13. A chip system, wherein the chip system is used in an electronic device, the chip system comprises one or more processors; and the processor is configured to invoke computer instructions, so that the method according to any one of claims 1 to 11 is performed.

14. A computer-readable storage medium, comprising instructions, wherein when the instructions are run on an electronic device, the method according to any one of claims 1 to 11 is performed.
